# EUROPEAN PATENT APPLICATION

(11) **EP 1 743 833 A1**
(43) Date of publication of application: **17.01.2007**
(21) Application number: 06014246.0
(22) Date of filing: 10.07.2006
(51) Int. Cl.: B62M 23/02, B62J 9/00

(54) **Electric bicycle**

(30) Priority: 11.07.2005 JP 2005201476
(71) Applicant: YAMAHA HATSUDOKI KABUSHIKI KAISHA, Iwata-shi, Shizuoka-ken 438-8501 (JP)
(72) Inventor: Okamoto, Ikuo, Iwata-shi Shizuoka-ken 438-8501 (JP); Hirata, Toshiki, Iwata-shi Shizuoka-ken 438-8501 (JP)
(74) Representative: Grünecker, Kinkeldey, Stockmair & Schwanhäusser Anwaltssozietät

(57) **Abstract**

The present invention relates to an electric bicycle (10) having a battery storage portion (37,31a,31b,38a,39a,39b) for storing a battery (36), and an article storage portion (41) for storing an article, mutually being arranged in an inner portion of a body of the electric bicycle (10), a seat (17) rotatably mounted to the body of the electric bicycle (10), and a seat lock mechanism (43) provided to a portion (37a), which separates the battery storage portion (37,31a,31b,38a,39a,39b) and the article storage portion (41) and to a lower surface of the seat (17).

## Description

The present invention relates to an electric bicycle provided with a pedal portion for inputting driving force and an electric motor for generating driving force.

Conventionally, there is known an electric bicycle provided with a pedal portion for inputting driving force by the rider, and an electric motor for generating driving force other than the driving force input by the rider (refer to, for example, JP-A-2002-326596). In this electric bicycle, an article storage portion for storing luggage such as a helmet, and a battery storage portion for storing a battery for driving the electric motor are provided in the inner portion of the body. Further, a seat on which the rider sits is provided in an upper portion of the body so as to be movable relative to the body, thereby allowing the article storage portion and the battery storage portion to be opened and closed.

The seat of such an electric bicycle is required to be securely fixed on the body side at all times except for when opening the article storage portion and the battery storage portion. For this reason, the seat of an electric bicycle is generally constructed such that its one end portion is hinged onto the body, allowing attachment and detachment of the other end portion thereof with respect to the body through the intermediation of a lock mechanism. Examples of the lock mechanism used in this case include a clamp-type fastening member mounted in place while being exposed to the outside, and a lock mechanism provided on the inner side of the body or seat and adapted to effect locking by pressing the seat to the body side and to effect unlocking through key operation.

Of the above-mentioned lock mechanisms, the lock mechanism mounted in place while being exposed to the outside is prone to tampering or the like. Further, the lock mechanism provided on the inner side of the body or seat requires an additional space for mounting the lock mechanism in the inner portion of the article storage portion or the battery storage portion, causing a reduction in the space for the article storage portion or the battery storage portion.

The present invention has been made with a view to overcoming the above-mentioned problems. Accordingly, it is an object of the present invention to provide an electric bicycle provided with a lock mechanism which can effect locking with reliability and which does not cause a reduction in the space for an article storage portion or a battery storage portion.

This objective is solved in an inventive manner by an electric bicycle having a battery storage portion for storing a battery, and an article storage portion for storing an article, mutually being arranged in an inner portion of a body of the electric bicycle, a seat rotatably mounted to the body of the electric vehicle, and a seat lock mechanism provided to a portion, which separates the battery storage portion and the article storage portion and to a lower surface of the seat.

Preferably, the electric bicycle further comprises a pedal portion for inputting driving force, and an electric motor for generating driving force, said battery being configured for driving the electric motor.

Further preferably, the battery storage portion for storing the battery, and the article storage portion for storing the article are formed in the inner portion of the body of the electric bicycle while being arranged longitudinally side-by-side.

Still further preferably, one end portion of the seat is hinged onto an upper portion of the body to allow the battery storage portion and the article storage portion to be freely opened and closed, and wherein the lock mechanism for attaching and detaching the other end portion of the seat with respect to the body is provided to a predetermined portion located between the battery storage portion and the article storage portion and to a predetermined portion of a lower surface of the seat.

Yet further preferably, the battery storage portion is provided with a guide member for guiding the battery when loading and unloading the battery with respect to the battery storage portion, and wherein the lock mechanism is arranged in proximity to the guide member.

According to another embodiment, the lock mechanism for attaching/detaching the seat with respect to the body is provided to a wall surface portion between the battery storage portion and the storage container and to the lower surface of the seat.

According to still another embodiment, the body includes a head pipe that supports a steering shaft, a down tube whose front end portion is connected to the head pipe, and a pair of rear frames extending upwardly rearward from a rear end portion of the down tube, the battery storage portion and the article storage portion being provided between the pair of rear frames.

According to yet another embodiment, a bottom surface of the article storage portion is located below an upper surface of each of the pair of rear frames, and both sides of an upper-side portion of the article storage portion along a lateral direction of the electric bicycle are projected outward beyond inner side surfaces of the pair of rear frames.

According to a further embodiment, a seat rail is provided above the pair of rear frames via a suspension member, the seat is supported on the seat rail, and both side portions of the battery storage portion with respect to the lateral direction of the electric bicycle are surrounded by the seat rail.

Therein, a front portion of the seat rail might be bent in a semi-circular shape, and a connecting member for effecting hinged connection of the seat might be provided to the bent portion of the seat rail.

According to yet another preferred embodiment, a charging apparatus for charging the battery is provided in a side portion of the body in proximity to the lock mechanism, the charging apparatus being arranged so that when the seat is lifted up to open the battery storage portion and the article storage portion, a charging terminal provided to the charging apparatus is exposed to an outside, and when the seat is lowered to close the battery storage portion and the article storage portion, the charging terminal is hidden by the seat.

In the following, the present invention is explained in greater detail with respect to several embodiments thereof in conjunction with the accompanying drawings, wherein:
- FIG. 1: is a side view showing an electric bicycle according to an embodiment,
- FIG. 2: is a front view showing an upper-side portion of the electric bicycle,
- FIG. 3: is a side view showing the frame portion of the body,
- FIG. 4: is a perspective view, as seen diagonally from above, of the inner portion of a rear cover member,
- FIG. 5: is a perspective view of the electric bicycle shown in FIG. 4 in a state in which the battery is removed,
- FIG. 6: is a side view of the electric bicycle in the state shown in FIG. 5,
- FIG. 7: is a side view showing how the battery is mounted to the electric bicycle in the state shown in FIG. 6,
- FIG. 8: is a side view showing a state in which the battery has been mounted to the electric bicycle in the state shown in FIG. 6,
- FIG. 9: is a perspective view showing a state in which the seat has been lifted up to open the body,
- FIG. 10: is a side view showing a state in which the seat has been lifted up to open the body,
- FIG. 11: is a side view showing a state in which the seat is being lowered,
- FIG. 12: is a side view showing a lock mechanism in an unlocked state,
- FIG. 13: is a side view showing the lock mechanism in a locked state,
- FIG. 14: is a side view showing the seat and the body in a state in which locking is effected by the lock mechanism, and
- FIG. 15: is a side view showing the seat and the body in a state in which the locking by the lock mechanism has been released, and
- FIG. 16: is a perspective view showing a state in which a connection cord is connected to a charging connector.

### Description of Reference Numerals and Symbols

- 10:: electric bicycle
- 10a:: body
- 17:: seat
- 18:: pedal portion
- 21:: head pipe
- 22:: down tube
- 31a, 31b:: rear frame
- 32a, 32b:: suspension member
- 33:: seat rail
- 35:: connecting member
- 36:: battery
- 37:: guide member
- 37a:: wall surface portion
- 37c:: bottom surface portion
- 38:: support member
- 38a:: regulating member
- 39a, 39b:: support plate
- 41:: storage container
- 41a:: container lower portion
- 41b:: container upper portion
- 43:: lock mechanism
- 48:: connector
- 48a:: connection cord
- 54:: electric motor

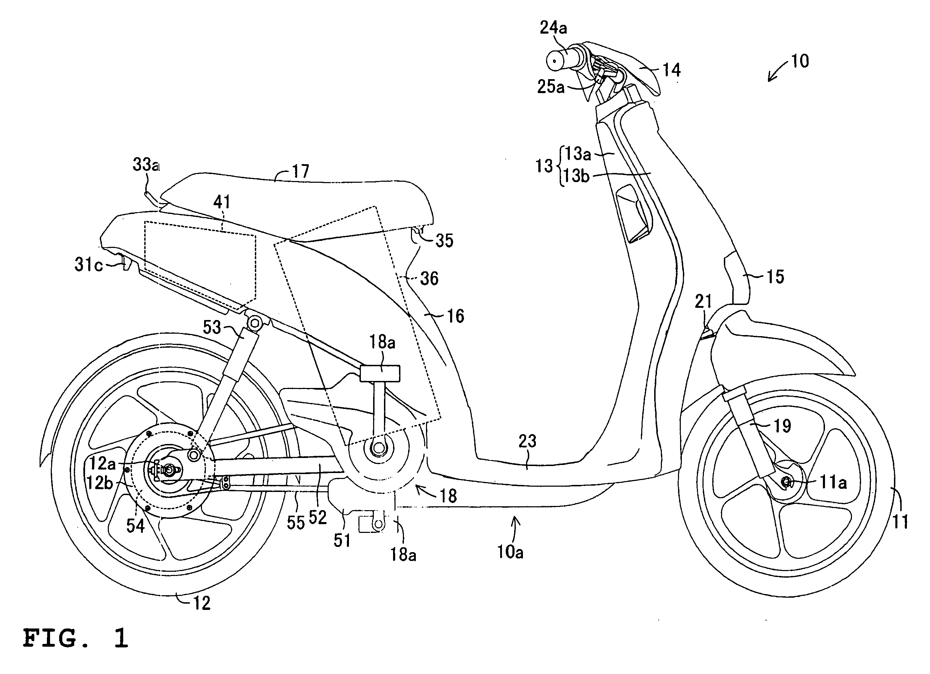

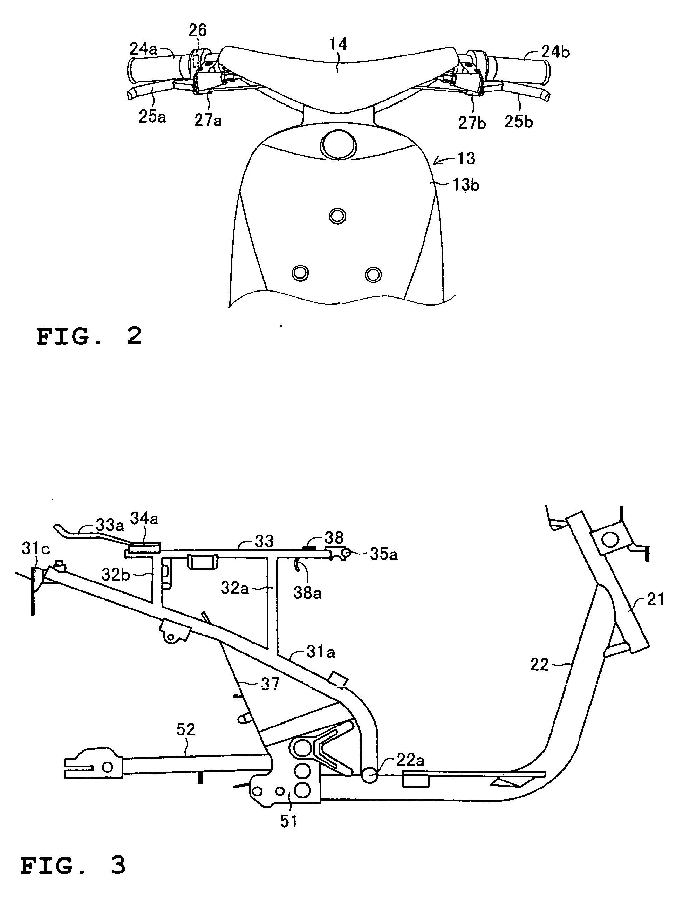

Hereinafter, an embodiment will be described with reference to the drawings. FIG. 1 shows an electric bicycle 10 according to this embodiment. The electric bicycle 10 is provided with a pair of wheels including of a front wheel 11 and a rear wheel 12, and a body 10a to which the pair of wheels are mounted. Further, as shown in FIG. 2, a handlebar 14 is mounted above a front cover member 13 constituting the front-side portion of the body 10a. A light 15 is provided at the center of the front face of the front cover member 13 with respect to the vertical and lateral directions. Further, a seat 17 is formed on the upper surface of a rear cover member 16 constituting the rear-side portion of the body 10a. A pedal portion 18 for inputting driving force by the rider is provided in a lower front-side portion of the rear cover member 16 of the body 10a.

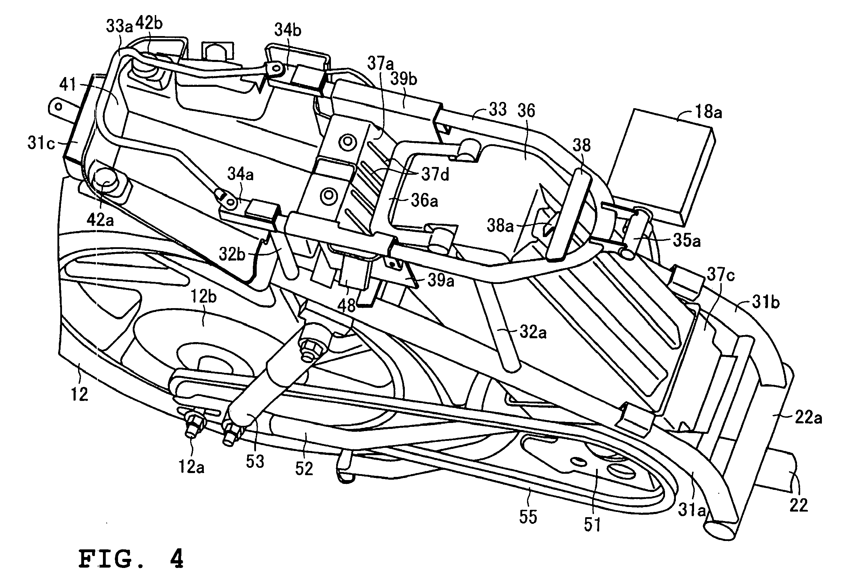

The front wheel 11 is rotatably supported on a lower end portion of a front fork 19 whose lower part is bifurcated. That is, the two lower end portions of the front fork 19 rotatably support the both side portions of a center shaft 11 a of the front wheel 11, thereby allowing the front wheel 11 to rotate about the center shaft 11 a. Further, a head pipe 21 is arranged at an upper end portion of the front fork 19. The head pipe 21 is connected to the front end portion (upper end portion) of a down tube 22 constituting the main body portion of the body 10a as shown in FIG. 3. The down tube 22 is located inside a connection cover member 23 connecting between the front cover member 13 and the rear cover member 16.

Further, a steering shaft (not shown) is mounted inside the head pipe 21 so as to be axially rotatable. The lower end portion of the steering shaft is connected to the central portion at the upper end of the front fork 19. Further, the upper portion of the steering shaft projects upwardly from the upper end portion of the head pipe 21, with the handlebar 14 being connected to the upper end portion thereof. Accordingly, when the steering shaft is axially rotated by operating the handlebar 14, the front wheel 11 changes in direction to the left or right in accordance with the amount of rotation of the steering shaft.

Further, grips 24a and 24b are respectively provided at the left and right ends of the handlebar 14. The grip 24a is provided so as to be axially rotatable. Other than serving as a gripping portion to be held by the hand, the grip 24a also constitutes an accelerator controller for adjusting the rotational speed of an electric motor 54 that will be described later. Further, the grip 24b serves as a gripping portion that is fixed onto the handlebar 14 and to be held by the hand. Further, brake levers 25a and 25b are disposed near the grips 24a and 24b, respectively. The brake levers 25a and 25b are urged so as to be spaced apart from the grips 24a and 24b, and serve to suppress the rotation of the front wheel 11 or rear wheel 12 when pulled toward the grips 24a and 24b, respectively.

Further, a potentiometer 26 for detecting the amount of rotation of the grip 24a is disposed near the grip 24a within the handlebar 14. Further, brake switches 27a and 27b for detecting that the brake levers 25a and 25b have been operated are connected to the brake levers 25a and 25b, respectively. The front cover member 13 is constituted with a rear surface cover portion 13a forming the rear surface and a front surface cover portion 13b forming the front surface, which are fixed in place with a plurality of screws, with a space being formed inside the inner portion of the front cover member 13. Part of the head pipe 21 and down tube 22 and the steering shaft, as well as a controller for electrically controlling a drive system, a power supply switch (not shown), and the like equipped to the electric bicycle 10 are disposed in the above-mentioned space.

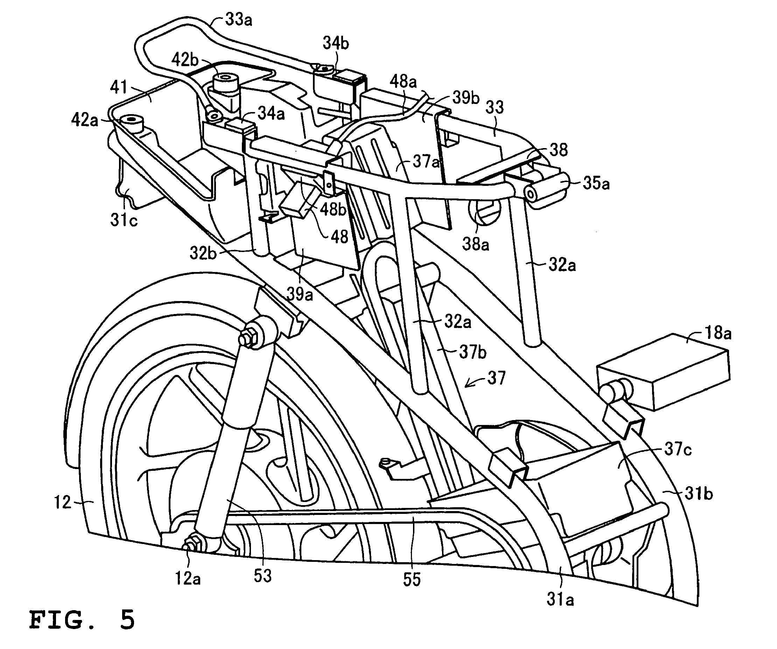

Further, the down tube 22, whose front end portion (upper end portion) is connected to the head pipe 21, extends rearward and diagonally downward from its connecting portion with the head pipe 21, and then curved so as to extend horizontally rearward. Further, a pair of rear frames 31 a and 31 b, which extend diagonally upward within the rear cover member 16 toward the rear side through the intermediation of a horizontal support bar 22a, are connected to the rear end-side portion of the down tube 22 as shown in FIGS. 4 and 5. The pair of rear frames 31 a and 31 b are arranged with a predetermined spacing being maintained therebetween. The respective rear end portions of the rear frames 31 a and 31 b are connected to each other by a plate-like connecting member 31 c.

Further, pipe-like suspension members 32a and 32b of different lengths are connected to the respective upper surfaces of the rear frames 31a and 31b while maintaining a predetermined spacing therebetween. The heights of the upper end portions of the suspension members 32a and 32b are set to be substantially the same, and a seat rail 33 is connected to the upper end portions. The seat rail 33 is formed so as to have a U-shaped configuration as seen in plan view, and is connected to the upper end portion of each of the suspension members 32a and 32b in such a manner that the curved portion of the U-shaped seat rail 33 is located on the front side of the electric bicycle 10.

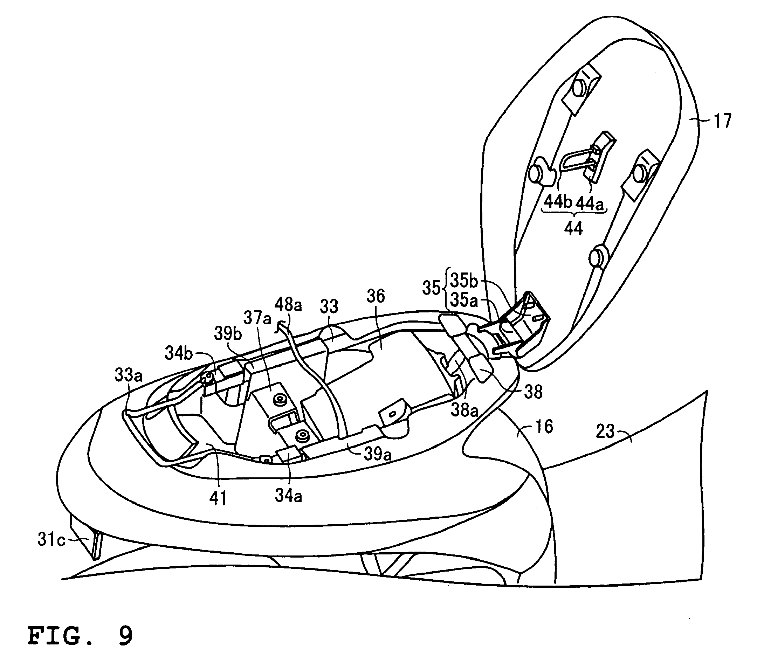

Further, the end portions of an auxiliary seat rail 33a, which is formed so as to have a substantially U-shaped configuration as seen in plan view, are respectively connected via connecting members 34a and 34b to both rear end portions of the seat rail 33. The seat rail 33 and the auxiliary seat rail 33a thus form a longitudinally elongated, substantially elliptical frame portion. Further, a rotary shaft member 35a is fixed to the front end portion of the seat rail 33. The rotary shaft member 35a constitutes a part of a connecting member 35 (see FIG. 9) for effecting hinged connection of the seat 17 to the seat rail 33.

Further, an L-shaped guide member 37 for supporting a battery 36 is mounted to a lower-side portion between the pair of rear frames 31 a and 31 b while being inclined so that the bottom portion of the guide member 37 is located on the front side with respect to the upper portion thereof. As shown in FIG. 5, the guide member 37 is constituted with a wall surface portion 37a, a rail portion 37b, and a bottom surface portion 37c. Further, the front surface of the wall surface portion 37a is formed as an inclined surface so that its lower portion is located on the front side with respect to the upper portion. A plurality of vertically extending protrusions 37d are formed in the inclined surface. Further, the rail portion 37b includes a resin-formed member that extends downwardly from the lower portion of the wall surface portion 37a at the same inclination as that of the wall surface portion 37a. Further, the bottom surface portion 37c is formed as a box-like member of a small height disposed at the lower end of the rail portion 37b.

Further, a T-shaped support member 38 is bridged over the front end-side portion of the seat rail 33, and a regulating member 38a is mounted to the lower end portion of the support member 38. The regulating member 38a contacts an upper portion of the front surface of the battery 36, and regulates longitudinal rocking of the battery 36 together with the wall surface portion 37a. Further, square support plates 39a and 39b are mounted to portions on both sides of the seat rail 33 which corresponds to the wall surface portion 37a and the portion in front thereof. The guide member 37, the rear frames 31 a and 31 b, the regulating member 38a, and the support plates 39a and 39b constitute a battery storage portion according to the present embodiment.

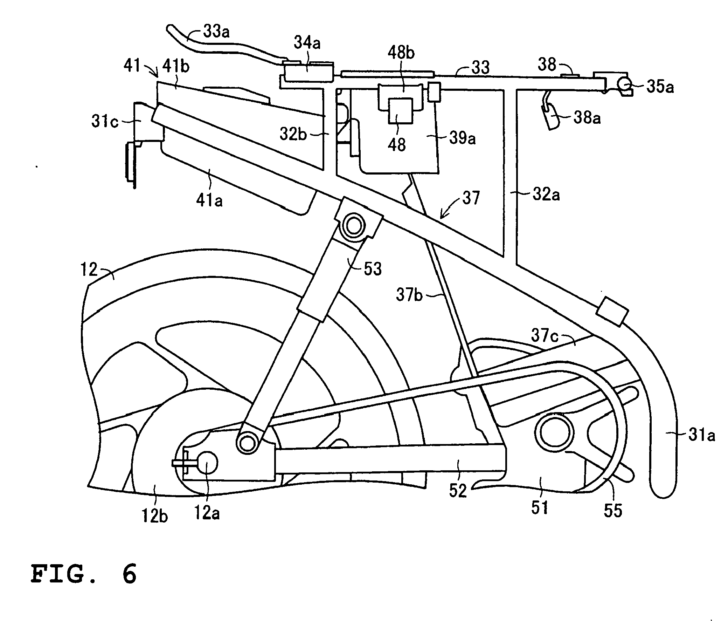

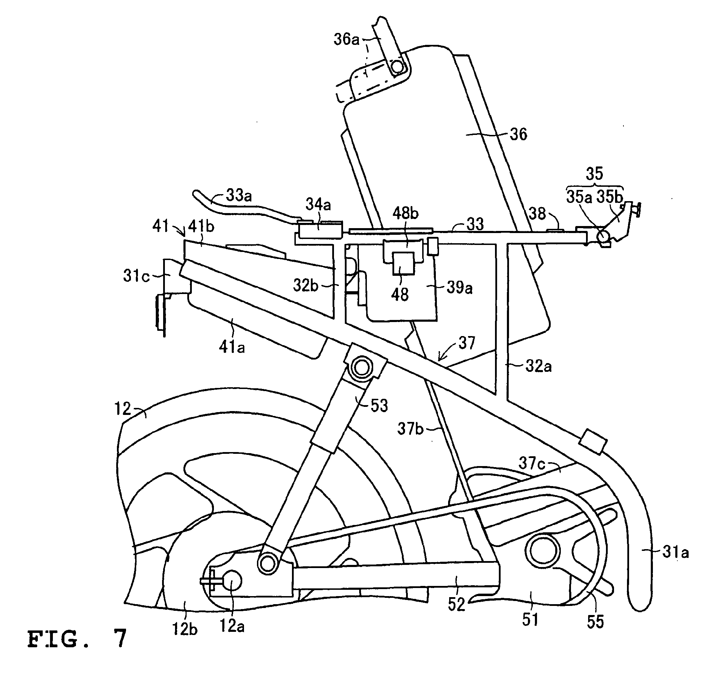

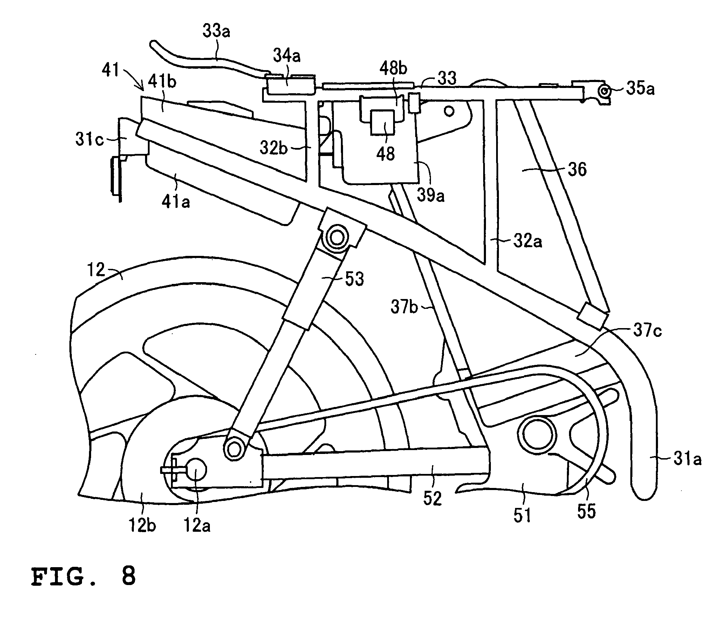

The battery 36 is mounted to the battery storage portion by sliding the battery 36 diagonally downward along the guide member 37 from the state as shown in FIGs. 5 and 6 to the state as shown in FIGs. 7 and 8. A handle 36a is provided to an upper portion of the battery 36 so as to be rotatable between the upper end edge portion on the rear side of the battery 36 and the portion located above the upper end edge portion. To move the battery 36, the handle 36a is rotated upward and held with the hand. When the battery 36 is mounted to the battery storage portion, this results in the state as shown in FIG. 4. In this state, the lower end portion of the battery 36 is inserted into the bottom surface portion 37c, thereby preventing longitudinal and lateral displacements. Further, the longitudinal displacement of the upper-side portion of the battery 36 is prevented by means of the wall surface portion 37a and the regulating member 38a, and the lateral displacement thereof is prevented by means of the support plates 39a and 39b.

Further, a box-like storage container 41 constituting an article storage portion according to the present embodiment is fixed to the rear end portions of the rear frames 31 a and 31 b via fixing members 42a and 42b, respectively. The storage container 41 has a container lower portion 41 a located below the upper surface of each of the rear frames 31 a and 31 b, and a container upper portion 41 b located above the upper surface of each of the rear frames 31 a and 31 b. While the longitudinal lengths of the container lower portion 41 a and container upper portion 41 b are set to be the same, the width of the container lower portion 41 a is set smaller than the width of the container upper portion 41 b.

That is, the container lower portion 41 a is formed by a box-like portion extending downward while passing through the portion between the rear frames 31a and 31b. Thus, the container lower portion 41 a is smaller in width than the portion between the rear frames 31a and 31b. Further, the container upper portion 41b is formed by a substantially frame-like portion that extends upward after extending substantially horizontally along the upper surfaces of the rear frames 31 a and 31 b toward the outer side. The container upper portion 41 b is larger in width than the portion between the rear frames 31 a and 31 b.

The storage container 41 constructed as described above is fixed to the rear end portions of the rear frames 31 a and 31 b by the fixing members 42a and 42b, with the container lower portion 41 a being located between the rear frames 31 a and 31 b and the both side portions of the container upper portion 41 b being located on the upper surfaces of the rear frames 31a and 31b. The storage container 41 and the battery storage portion are separated from each other by the wall surface portion 37a. Further, the respective portions constituting the battery storage portion, such as the storage container 41, the rear frames 31a and 31b, and the seat rail 33, are covered by the rear cover member 16 so that they cannot be seen from the outside as shown in FIG. 1.

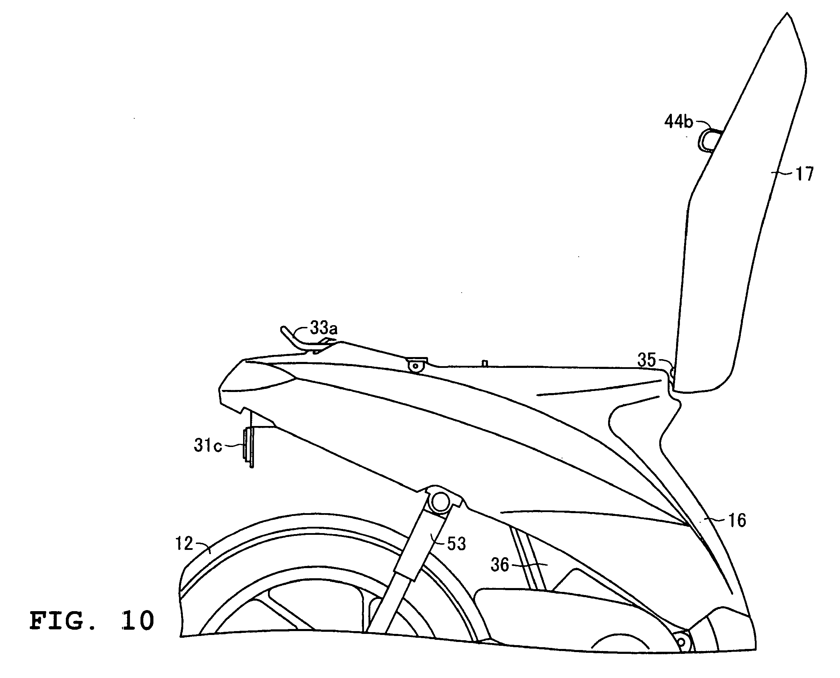

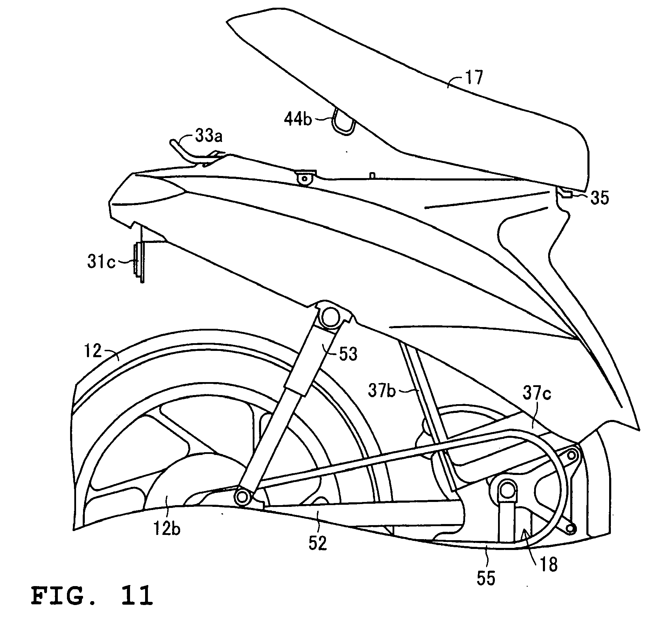

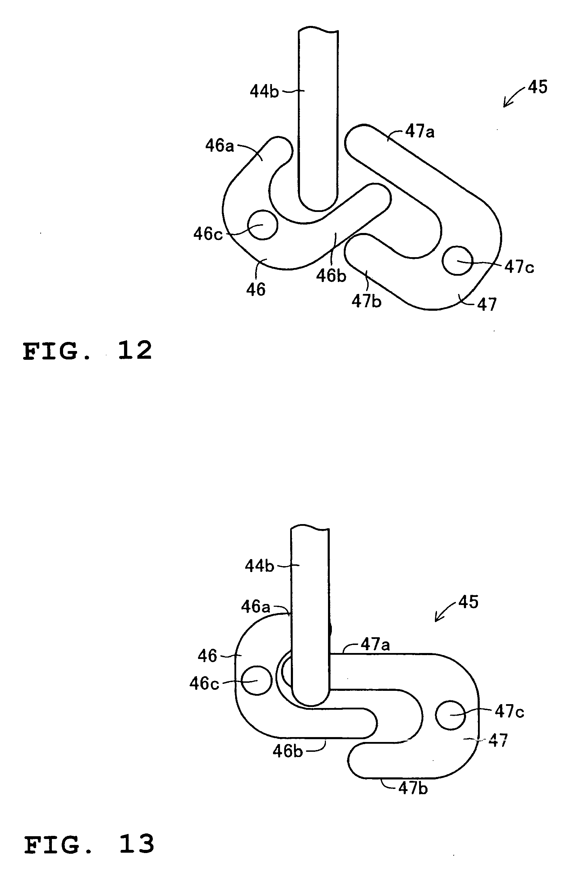

Further, as shown in FIG. 9, a mounting member 35b, which is assembled onto the rotary shaft member 35a to thereby form the connecting member 35, is fixed at the front end portion of the lower surface of the seat 17. The mounting member 35b is rotatably assembled onto the rotary shaft member 35a, thus allowing the seat 17 to rotate about the rotary shaft member 35a as shown in FIGS. 10 and 11. Further, an engaged portion 44 constituting one side of a lock mechanism 43 shown in FIGs. 12 and 13 is fixed to the portion of the lower surface of the seat 17 opposed to the upper central portion of the wall surface portion 37a. The engaged portion 44 includes a fixing member 44a fixed onto the lower surface of the seat 17, and an engaged member 44b. The engaged member 44b is formed by bending a linear member into a U-shaped configuration, and is fixed to the fixing member 44a with its bent portion facing downward.

Further, an engaging portion 45, which detachably engages with the engaged portion 44, is provided at the laterally central portion of the upper surface of the wall surface portion 37a. The engaging portion 45 is formed with a substantially C-shaped, mutually engageable engaging member 46 and a disengaging member 47 that are arranged while being opposed to each other at their end portions. The engaging member 46 is formed with a central portion and two projections 46a and 46b, with the central portion being rotatably supported on a shaft portion 46c. Further, the engaging member 46 is urged by a spring member (not shown) so that the projection 46a is urged toward the vertical direction. The engaging member 46 rotates when the projection 46b is pushed downward by the engaged member 44b as the seat 17 is lowered to the body side.

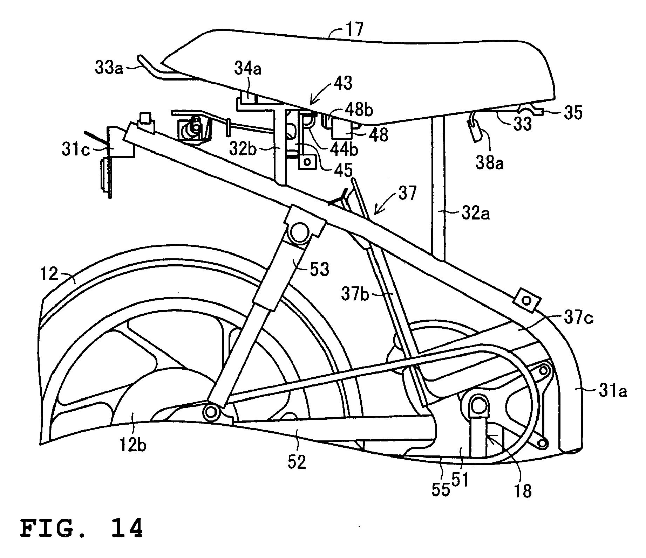

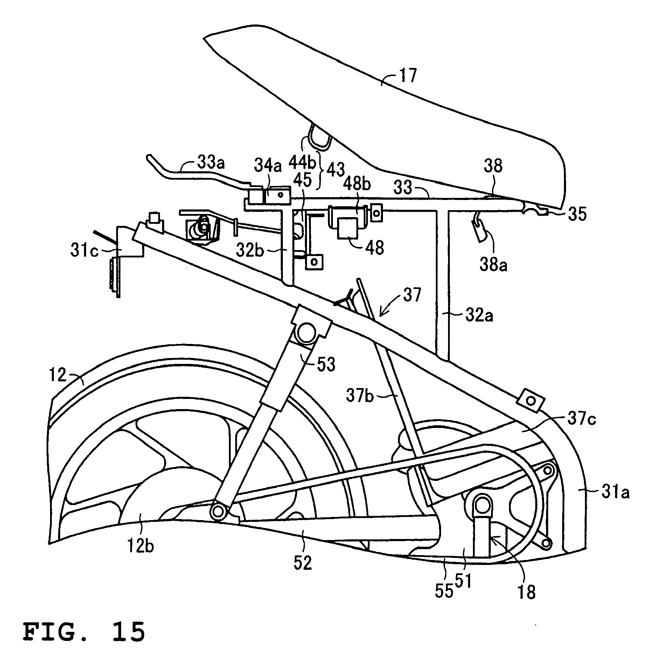

Further, the disengaging member 47 is formed with a central portion and two projections 47a and 47b, with the central portion being rotatably supported on a shaft portion 47c. Further, when the engaging member 46 rotates, the projection 46b is engaged between the projections 47a and 47b, so the disengaging member 47 rotates in the direction opposite to the engaging member 46. The rotation of the disengaging member 47 is locked by a fixing mechanism (not shown) when the disengaging member 47 has been rotated by a predetermined amount. The locking by the fixing mechanism can be released through key operation. When the locking by the fixing mechanism is released, due to the urging applied by the spring member, the engaging member 46 rotates so that the projection 46a is oriented in the vertical direction, thereby releasing the engagement of the engaging member 46 with the engaged member 44b. It should be noted that FIG. 14 shows the position of the seat 17 when locking is being applied by the lock mechanism 43, and FIG. 15 shows the position of the seat 17 when the locking of the lock mechanism 43 is released.

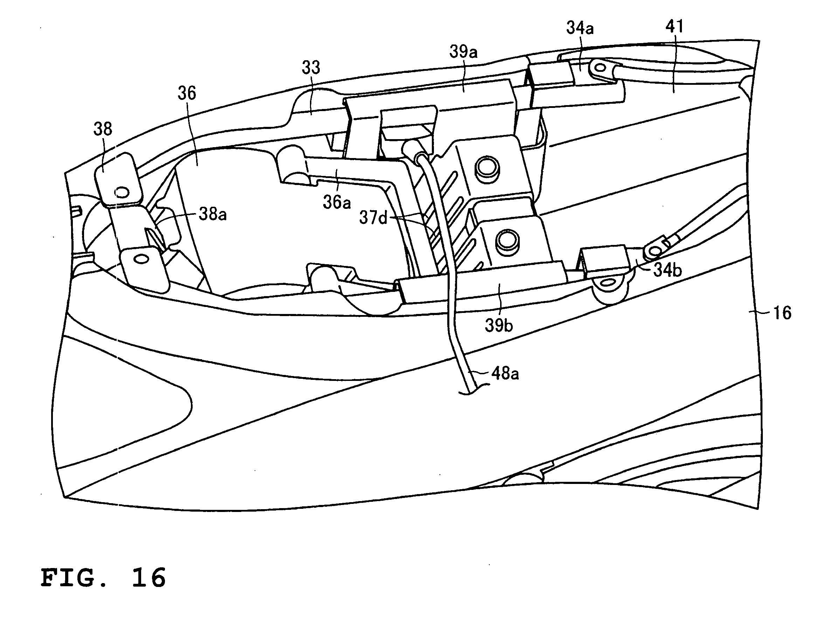

Further, a bracket 48b is mounted to the outer side portion of the portion of the seat rail 33 where the support plate 39a is mounted, with a charging connector 48 (see FIGs. 4 and 5) being provided via the bracket 48b. The connector 48 is disposed such that it can be connected to the battery 36 disposed in the battery storage portion, and a charging terminal (not shown) thereof is located in an opening formed in the support plate 39a. Further, as shown in FIG. 16, a connection cord 48a is connected to the charging terminal, thereby making it possible to charge the battery 36 from an external power source (not shown). During this charging, the seat 17 may be closed so that the inner portion thereof cannot be seen.

Further, a rear arm 52 having a pair of rearward extending arm members (only one of the arm members is shown in the drawing) is connected via a connecting member 51 (see FIG. 3) to the rear end portion of the down tube 22. The rear arm 52 is formed by connecting the front end portions of the pair of arm members arranged in parallel. Further, both side portions of a center shaft 12a of the rear wheel 12 are rotatably supported on the rear end portions of both the arm members of the rear arm 52. The rear wheel 12 can thus rotate about the center shaft 12a. Further, a rear cushion 53 is suspended between the upper-side portion at the rear end of the rear arm 52 and each of the substantially central portions of the rear frames 31 a and 31 b. The rear end side of the rear arm 52 can freely rock due to the expansion and contraction of the rear cushion 53.

Further, a transmission case 12b is provided at the central portion of the rear wheel 12. The electric motor 54 and a reduction gear are accommodated in the transmission case 12b. Further, a drum brake (not shown) is mounted to the left side surface of the transmission case 12b. The electric motor 54 is activated through control by the controller in accordance with the amount of operation on the grip 24a, thus automatically generating driving force in the rear wheel 12. Further, when the brake levers 25a and 25b have been operated, the activation of the electric motor 54 is stopped through control by the controller.

Further, a chain 55 is suspended between a gear portion provided to the pedal portion 18 and a gear portion provided to the rear wheel 12. As the rider rotates a pedal 18a with feet, man-power driving force is transmitted from the pedal portion 18 to the rear wheel 12 via the chain 55. Further, a brake (not shown) is also provided to the front wheel 11, and this brake and the drum brake of the rear wheel 12 are activated in accordance with the amount of operation on the brake levers 25a and 25b to brake the corresponding front wheel 11 and rear wheel 12, respectively. Further, the electric bicycle 10 is also equipped with a rotary stand (not shown) for keeping the electric bicycle 10 upright when stationary.

When the rider rides the electric bicycle 10 constructed as described above, the riders sits on the seat 17 and tums the power switch on. Then, the rider rests his/her both feet on the pedal 18a. When running the electric bicycle 10 while automatically generating the driving force due to the electric motor 54, such as when running on an uphill road or the like, the rider operates the grips 24a in accordance with the acceleration speed. The electric motor 54 can be thus activated to generate driving force in the rear wheel 12. In this case, when the rider does not perform any rotating operation while keeping his/her feet rested on the pedal 18a, a one-way clutch provided on the rear wheel 12 side is activated so that the rotation of the electric motor 54 is not transmitted to the pedal 18a via the chain 55. On the other hand, it is also possible for the rider to continue to rotate the pedal 18a with both feet, whereby the running speed of the electric bicycle 10 can be further increased with a small force applied by the rider.

Further, when running the electric bicycle 10 as a bicycle, such as when running on a level or downhill road, the pedal 18a is rotated with both feet, thereby generating driving force in the rear wheel 12. Further, when lowering the running speed of the electric bicycle 10, the brake levers 25a and 25b are operated as required. This allows the electric bicycle 10 to decelerate in accordance with the amount of operation on the brake levers 25a and 25b.

To lower the running speed of the electric bicycle 10, after operating the brake levers 25a and 25b and stopping the activation of the electric motor 54 through control by the controller, the operation on the brake levers 25a and 25b is further continued, thereby decelerating the electric bicycle 10 in accordance with the amount of operation on the brake levers 25a and 25b. Further, when stopping the running of the electric bicycle 10, the power switch is tuned off, and the stand is rotated downward onto the ground, thus bringing the electric bicycle 10 into an upright position.

At this time, if the charge capacity of the battery 36 has been reduced, the charging connection cord 48a is connected to the connector 48, thereby charging the battery 36. At the time of this charging, the lock of the lock mechanism 43 is released using the key, and the seat 17 is rotated to the position as shown in FIGs. 9 and 10. Then, the connector of the connection cord 48a connected to the power source is connected to the connector 48, thereby charging the battery 36. During this charging, the seat 17 is lowered to keep the upper surface of the rear cover member 16 closed. In this case, the connection cord 48a extends to the outside from the gap between the rear cover member 16 and the seat 17.

At the time of replacement of the battery 36 or the like, the battery 36 is pulled upward and to the rear along the inclined surface of the guide member 37. In this way, the battery 36 is smoothly pulled out. Further, when mounting the battery 36, as shown in FIGs. 7 and 8, the battery 36 is lowered from the upper side to the lower side along the inclined surface of the guide member 37. This allows the battery 36 to be smoothly moved into the installation position. In this case, the lower end portion of the battery 36 is positioned within the bottom surface portion 37c, with the back surface of the battery 36 being supported on the wall surface portion 37a. Further, the regulating member 38a restricts rocking motion of the upper front portion of the battery 36.

Accordingly, the battery 36 is mounted in a suitable state without rattling. Further, since the rear frames 31 a and 31 b and the seat rail 33 are located on both left and right sides of the battery storage portion, thereby making the battery storage portion structurally secure. Further, various articles can be stored as required in the storage container 41 located in rear of the battery storage portion.

As described above, in the electric bicycle 10 according to the present embodiment, the lock mechanism 43 is provided to the upper surface of the wall surface portion 37a, which separates the battery storage portion and the article storage portion from each other, and to the lower surface of the seat 17 opposed to that portion. Further, since the lock mechanism 43 is arranged inside the rear cover member 16 and the seat 17 and thus not exposed to the outside, the lock mechanism 43 can be protected against tampering or the like. Furthermore, this construction does not cause a reduction in the space for the battery storage portion and article storage portion.

Further, in the electric bicycle 10 according to the present embodiment, the battery storage portion is provided with the guide member 37 for guiding the battery 36 when loading and unloading the battery 36 to and from the battery storage portion, and the lock mechanism 43 is arranged in the upper surface of the guide member 37. This allows smooth loading and unloading of the battery 36 to and from the battery storage portion. Further, the wall surface portion 37a of the guide member 37 serves as the wall portion located between the battery storage portion and the article storage portion and serving to separate the battery storage portion and the article storage portion from each other, whereby the guide member 37 can be arranged in a compact manner.

Further, the battery storage portion and the article storage portion are provided between the rear frames 31 a and 31 b, whereby the battery storage portion and the article storage portion can be made structurally secure. Further, the storage container 41 is formed with the container lower portion 41 a with a small width and the container upper portion 41 b with a large width. The container lower portion 41 a is located below the portion between the rear frames 31 a and 31 b, and the both lateral side portions of the container upper portion 41 b are made to project outward beyond the respective inner side surfaces of the rear frames 31 a and 31 b. This construction makes it possible to increase the volume of the storage container 41 as a whole while protecting the container lower portion 41a of the storage container 41 by means of the rear frames 31 a and 31 b.

Further, the seat rail 33 for supporting the seat 17 is provided above the rear frames 31 a and 31 b, so the both lateral side portions of the battery storage portion are surrounded not only by the rear frames 31 a and 31 b but also by the seat rail 33. This construction allows the seat 17 to be securely supported in place, and also allows the battery storage portion to be securely protected by the rear frames 31 a and 31 b and the seat rail 33.

Furthermore, since the connecting member 35 for effecting hinged connection of the seat 17 is provided to the seat rail 33, the connecting member 35 can be securely fixed in place, whereby the seat 17 can be reliably connected to the seat rail 33.

Further, the charging connector 48 is provided to the support plate 39a constituting the battery storage portion so that when the seat 17 is lifted up to open the battery storage portion, the charging terminal of the connector 48 is exposed to the outside, and when the seat 17 is lowered to close the battery storage portion, the charging terminal is hidden under the seat 17. Accordingly, the connector 48 can be arranged in a compact manner in the portion inside the rear cover member 16 and the seat 17. Further, since the connector 48 is hidden by the seat 17 when the seat 17 is lowered, it is possible to protect the charging apparatus against tampering or the like. Further, the seat 17 can be lowered to effect locking while the connector 48 and the power source are connected to each other by the connection cord 48a, whereby charging can be performed while the seat 17 is kept closed. Further, the electric bicycle according to the present embodiment is not limited to that of the above-described teaching but can be modified and implemented in various ways as appropriate.

The description above discloses (amongst others), in order to attain the above-mentioned object, according to an embodiment, an electric bicycle including a pedal portion for inputting driving force, an electric motor for generating driving force, and a battery for driving the electric motor, in which a battery storage portion for storing the battery, and an article storage portion for storing a predetermined article are formed in an inner portion of the body of the electric bicycle while being arranged longitudinally side by side; one end portion of a seat is hinged onto an upper portion of the body to allow the battery storage portion and the article storage portion to be freely opened and closed; and a lock mechanism for attaching and detaching the other end portion of the seat with respect to the body is provided to a predetermined portion located between the battery storage portion and the article storage portion and to a predetermined portion of a lower surface of the seat.

In this case, the predetermined portion located between the battery storage portion and the article storage portion refers to a wall portion, a frame portion, or the like that separates the battery storage portion and the article storage portion from each other. As described above, in the electric bicycle according to the present embodiment, the lock mechanism is provided to the predetermined portion such as a wall portion or a frame portion separating the battery storage portion and the article storage portion from each other, and to the portion of the lower surface of the seat opposed to the predetermined portion, thereby enabling effective utilization of the dead space between the battery storage portion and the article storage portion. Accordingly, for example, there is no particular need to provide a space for providing the lock mechanism to the other end portion of the storage portion provided on the other end side. Further, the lock mechanism is arranged inside the body and the seat and thus not exposed to the outside, whereby the lock mechanism can be protected against tampering or the like. Furthermore, the above-described construction does not reduce the spaces of the battery storage portion and article storage portion.

Further, in another embodiment of the electric bicycle, the battery storage portion is provided with a guide member for guiding the battery when loading and unloading the battery with respect to the battery storage portion, the lock mechanism being arranged in proximity to the guide member. In this case, the guide member is located on the side of the battery storage portion located between the battery storage portion and the article storage portion, whereby the guide member can also serve as a wall portion or the like for separating between the battery storage portion and the article storage portion. The guide member can be thus arranged in a compact manner.

Further, in still another embodiment, the body includes a head pipe that supports a steering shaft, a down tube whose front end portion is connected to the head pipe, and a pair of rear frames extending upwardly rearward from a rear end portion of the down tube, the battery storage portion and the article storage portion being provided between the pair of rear frames. Accordingly, the battery storage portion and the article storage portion can be made structurally secure as they are protected by the pair of rear frames.

Further, in still another embodiment of the electric bicycle, a bottom surface of the article storage portion is located below an upper surface of each of the pair of rear frames, and both sides of an upper-side portion of the article storage portion along a lateral direction of the electric bicycle are projected outward beyond inner side surfaces of the pair of rear frames. This construction allows the upper side portion of the article storage portion to be enlarged in width while protecting the lower side portion of the article storage portion by the pair of rear frames, thereby making it possible to increase the volume of the article storage portion as a whole.

Further, in still another embodiment of the electric bicycle, a seat rail is provided above the pair of rear frames via a suspension member, the seat is supported on the seat rail, and both side portions of the battery storage portion with respect to the lateral direction of the electric bicycle are surrounded by the seat rail. This construction allows the portion of the body which supports the seat to be made structurally secure. Further, the battery storage portion is made even more structurally secure as it is protected by the rear frames and the seat rail.

Further, in still another embodiment of the electric bicycle, a front portion of the seat rail is bent in a semi-circular shape, and a connecting member for effecting hinged connection of the seat is provided to the bent portion of the seat rail. This construction allows the connecting member to be securely fixed in place, whereby the seat can be reliably connected to the seat rail that constitutes a part of the body.

Further, in still another embodiment of the electric bicycle, a charging apparatus for charging the battery is provided in a side portion of the body in proximity to the lock mechanism, the charging apparatus being arranged so that when the seat is lifted up to open the battery storage portion and the article storage portion, a charging terminal provided to the charging apparatus is exposed to an outside, and when the seat is lowered to close the battery storage portion and the article storage portion, the charging terminal is hidden by the seat.

The charging apparatus can be thus arranged in a compact manner on the inner side between the body and the seat. Further, when the seat is lowered, the charging apparatus is hidden by the seat, whereby the charging apparatus can be protected against tampering or the like. In this case, it is preferred that locking can be effected by lowering the seat with the connection cord, which connects between the charging apparatus and the power source, connected as it is. This allows charging to be performed while keeping the seat closed. Accordingly, the charging apparatus can be protected against tampering or the like during the charging operation as well. Further, a charging connector may be used as the charging apparatus used in this case.

Further, the description discloses (as a particularly preferred embodiment), in order to provide an electric bicycle provided with a lock mechanism which can effect locking with reliability and which does not cause a reduction in the space for an article storage portion or battery storage portion, a bicycle having a battery storage portion for storing a battery 36, and a storage container 41 for storing an article are formed while being arranged longitudinally side by side within the body of an electric bicycle 10 provided with a pedal portion 18, an electric motor 54, and the battery 36. The front end portion of a seat 17 is hinged onto the upper portion of the body by a connecting member 35. A lock mechanism 43 for attaching/detaching the rear-side portion of the seat 17 with respect to the body is provided to a wall surface portion 37a between the battery storage portion and the storage container 41 and to the lower surface of the seat 17. Further, a guide member 37 for guiding the battery 36 is provided to the battery storage portion. Further, the battery storage portion and the storage container 41 are disposed between rear frames 31 a and 31 b.

Further, the description discloses according to a preferred first aspect, an electric bicycle comprising a pedal portion for inputting driving force, an electric motor for generating driving force, and a battery for driving the electric motor, wherein a battery storage portion for storing the battery, and an article storage portion for storing a predetermined article are formed in an inner portion of the body of the electric bicycle while being arranged longitudinally side by side; one end portion of a seat is hinged onto an upper portion of the body to allow the battery storage portion and the article storage portion to be freely opened and closed; and a lock mechanism for attaching and detaching the other end portion of the seat with respect to the body is provided to a predetermined portion located between the battery storage portion and the article storage portion and to a predetermined portion of a lower surface of the seat.

Further, according to a preferred second aspect, the battery storage portion is provided with a guide member for guiding the battery when loading and unloading the battery with respect to the battery storage portion, the lock mechanism being arranged in proximity to the guide member.

Further, according to a preferred third aspect, the body includes a head pipe that supports a steering shaft, a down tube whose front end portion is connected to the head pipe, and a pair of rear frames extending upwardly rearward from a rear end portion of the down tube, the battery storage portion and the article storage portion being provided between the pair of rear frames.

Further, according to a preferred fourth aspect, a bottom surface of the article storage portion is located below an upper surface of each of the pair of rear frames, and both sides of an upper-side portion of the article storage portion along a lateral direction of the electric bicycle are projected outward beyond inner side surfaces of the pair of rear frames.

Further, according to a preferred fifth aspect, a seat rail is provided above the pair of rear frames via a suspension member, the seat is supported on the seat rail, and both side portions of the battery storage portion with respect to the lateral direction of the electric bicycle are surrounded by the seat rail.

Further, according to a preferred sixth aspect, a front portion of the seat rail is bent in a semi-circular shape, and a connecting member for effecting hinged connection of the seat is provided to the bent portion of the seat rail.

Further, according to a preferred seventh aspect, a charging apparatus for charging the battery is provided in a side portion of the body in proximity to the lock mechanism, the charging apparatus being arranged so that when the seat is lifted up to open the battery storage portion and the article storage portion, a charging terminal provided to the charging apparatus is exposed to an outside, and when the seat is lowered to close the battery storage portion and the article storage portion, the charging terminal is hidden by the seat.

## Claims

1. Electric bicycle (10) having
a battery storage portion (37,31a,31b,38a,39a,39b) for storing a battery (36), and an article storage portion (41) for storing an article, mutually being arranged in an inner portion of a body of the electric bicycle (10),
a seat (17) rotatably mounted to the body of the electric vehicle (10), and
a seat lock mechanism (43) provided to a portion (37a), which separates the battery storage portion (37,31 a,31 b,38a,39a,39b) and the article storage portion (41) and to a lower surface of the seat (17).

2. Electric bicycle according to claim 1, further comprising a pedal portion (18) for inputting driving force, and an electric motor (54) for generating driving force, said battery (36) being configured for driving the electric motor (54).

3. Electric bicycle according to claim 1 or 2, wherein the battery storage portion for storing the battery, and the article storage portion for storing the article are formed in the inner portion of the body of the electric bicycle while being arranged longitudinally side-by-side.

4. Electric bicycle according to one of the claims 1 to 3, wherein one end portion of the seat is hinged onto an upper portion of the body to allow the battery storage portion and the article storage portion to be freely opened and closed, and wherein the lock mechanism for attaching and detaching the other end portion of the seat with respect to the body is provided to a predetermined portion located between the battery storage portion and the article storage portion and to a predetermined portion of a lower surface of the seat.

5. Electric bicycle according to one of the claims 1 to 4, wherein the battery storage portion is provided with a guide member for guiding the battery when loading and unloading the battery with respect to the battery storage portion, and wherein the lock mechanism is arranged in proximity to the guide member.

6. Electric bicycle according to one of the claims 1 to 5, wherein the lock mechanism (43) for attaching/detaching the seat (17) with respect to the body is provided to a wall surface portion (37a) between the battery storage portion and the storage container (41) and to the lower surface of the seat (17).

7. Electric bicycle according to one of the claims 1 to 6, wherein the body includes a head pipe that supports a steering shaft, a down tube whose front end portion is connected to the head pipe, and a pair of rear frames extending upwardly rearward from a rear end portion of the down tube, the battery storage portion and the article storage portion being provided between the pair of rear frames.

8. Electric bicycle according to claim 7, wherein a bottom surface of the article storage portion is located below an upper surface of each of the pair of rear frames, and both sides of an upper-side portion of the article storage portion along a lateral direction of the electric bicycle are projected outward beyond inner side surfaces of the pair of rear frames.

9. Electric bicycle according to claim 7 or 8, wherein a seat rail is provided above the pair of rear frames via a suspension member, the seat is supported on the seat rail, and both side portions of the battery storage portion with respect to the lateral direction of the electric bicycle are surrounded by the seat rail.

10. Electric bicycle according to claim 9, wherein a front portion of the seat rail is bent in a semi-circular shape, and a connecting member for effecting hinged connection of the seat is provided to the bent portion of the seat rail.

11. Electric bicycle according to one of the claims 1 to 10, wherein a charging apparatus for charging the battery is provided in a side portion of the body in proximity to the lock mechanism, the charging apparatus being arranged so that when the seat is lifted up to open the battery storage portion and the article storage portion, a charging terminal provided to the charging apparatus is exposed to an outside, and when the seat is lowered to close the battery storage portion and the article storage portion, the charging terminal is hidden by the seat.
